# EUROPEAN PATENT APPLICATION

(11) **EP 3 570 261 A1**
(43) Date of publication of application: **20.11.2019**
(21) Application number: 19174258.4
(22) Date of filing: 14.05.2019
(51) Int. Cl.: G08B 29/14, G08B 17/107

(54) **SMOKE SIMULATOR TEST STRUCTURE DEVICE AND METHOD**

(30) Priority: 14.05.2018 US 201862671089 P
(71) Applicant: Excelitas Canada Inc., Québec J7V 8P7 (CA)
(72) Inventor: Godfrey, Lawrence Allan, Vaudreuil-Dorion Québec, J7V 8P7 (CA)
(74) Representative: Bosch Jehle Patentanwaltsgesellschaft mbH

(57) **Abstract**

A smoke simulator structure (200) simulates smoke in a system for testing a smoke detector having a light source (122) which emits a light beam (123) of a first wavelength and a sensor (124) is configured to receive scattered and/or deflected light. A volume of optical material is configured to convey light of the first wavelength. An ingress surface (210) of the volume is configured to receive the light beam. Multiple features (230) at multiple locations within the volume are configured to deflect/scatter light from the light beam in a manner similar to smoke particles. A first egress surface (221) is configured to convey the deflected/scattered light directed toward the sensor.

## Description

### CROSS-REFERENCE TO RELATED APPLICATIONS

This application claims the benefit of U.S. Provisional Patent Application serial number 62/671,089, filed May 14, 2018, entitled "Smoke Simulator Test Structure," which is incorporated by reference herein in its entirety.

### FIELD OF THE INVENTION

The present invention relates to smoke detection devices and more particularly, is related to testing of smoke detection devices.

### BACKGROUND OF THE INVENTION

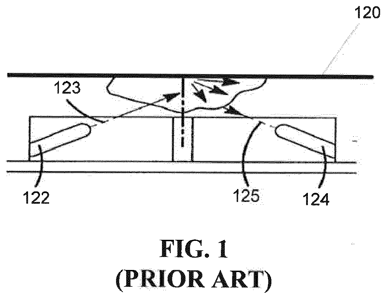

Photoelectric smoke detectors may detect smoke by directing a beam of light through a smoke chamber and detecting light deflecting/scattering off the beam toward a light sensing element within the smoke chamber. Existing tests for smoke detectors include a light emitting source that is directed toward a two dimensional target, for example, the surface of a target sheet of paper, such that the sensing element detects light deflected/scattered by the two dimensional target. For example, as shown by FIG. 1, a light source 122 provides a light beam 123 that is directed toward a two dimensional target 120, for example, a white paper. A light sensor 124 may be positioned at some angle with respect to the light source 122. The two dimensional target 120 scatters some of the light beam 123, so that the light sensor 124 may detect a portion of scattered light 125.

Testing a smoke detector with the two dimensional target, while viable, may not adequately predict the performance in actual smoke conditions. Therefore, there is a need in the industry to address this deficiency.

### SUMMARY OF THE INVENTION

Embodiments of the present invention provide a smoke simulator test structure device and method. Briefly described, a first aspect of the present invention is directed to a structure that simulates smoke in a system for testing a smoke detector having a light source emits a light beam of a first wavelength and a sensor is configured to receive scattered and/or deflected light. A volume of optical material is configured to convey light of the first wavelength. An ingress surface of the volume is configured to receive the light beam. Multiple features at multiple locations within the volume are configured to deflect/scatter light from the light beam in a manner similar to smoke particles. A first egress surface is configured to convey the deflected/scattered light directed toward the sensor.

A second aspect of the present invention is directed to a method for forming a smoke simulator structure includes forming a volume of optical material configured to convey light of the first wavelength, forming an ingress surface of the volume configured to receive the light beam, forming multiple features at multiple locations within the volume configured to deflect/scatter light in a manner similar to smoke particles, and forming a first egress surface configured to convey the deflected/scattered light directed toward the sensor.

Other systems, methods and features of the present invention will be or become apparent to one having ordinary skill in the art upon examining the following drawings and detailed description. It is intended that all such additional systems, methods, and features be included in this description, be within the scope of the present invention and protected by the accompanying claims.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principals of the invention.
FIG. 1 is a schematic diagram of a prior art smoke detector test system.
FIG. 2A is a schematic diagram of a smoke detector test system using a first embodiment of a three dimensional smoke simulator test structure.
FIG. 2B is a schematic diagram of the smoke simulator test structure of FIG. 2A from a perspective angle.
FIG. 3 is a schematic diagram of an alternative embodiment of a smoke simulator test structure in a test system
FIG. 4 is a schematic diagram of a third embodiment of a smoke simulator test structure.
FIG. 5A is a schematic diagram of a first variation on the third embodiment of the smoke simulator test structure.
FIG. 5B is a schematic diagram of a second variation on the third embodiment of the smoke simulator test structure.
FIG. 6A is a schematic diagram of a first orientation of the third embodiment of the smoke simulator test structure in a test system.
FIG. 6B is a schematic diagram of a second orientation of the third embodiment of the smoke simulator test structure in a test system.
FIG. 7 is a flowchart of an exemplary method for manufacturing the first embodiment of the smoke simulator test structure.
FIG. 8 is a flowchart of further steps for the exemplary of FIG. 7.

### DETAILED DESCRIPTION

Reference will now be made in detail to embodiments of the present invention, examples of which are illustrated in the accompanying drawings. Wherever possible, the same reference numbers are used in the drawings and the description to refer to the same or like parts.

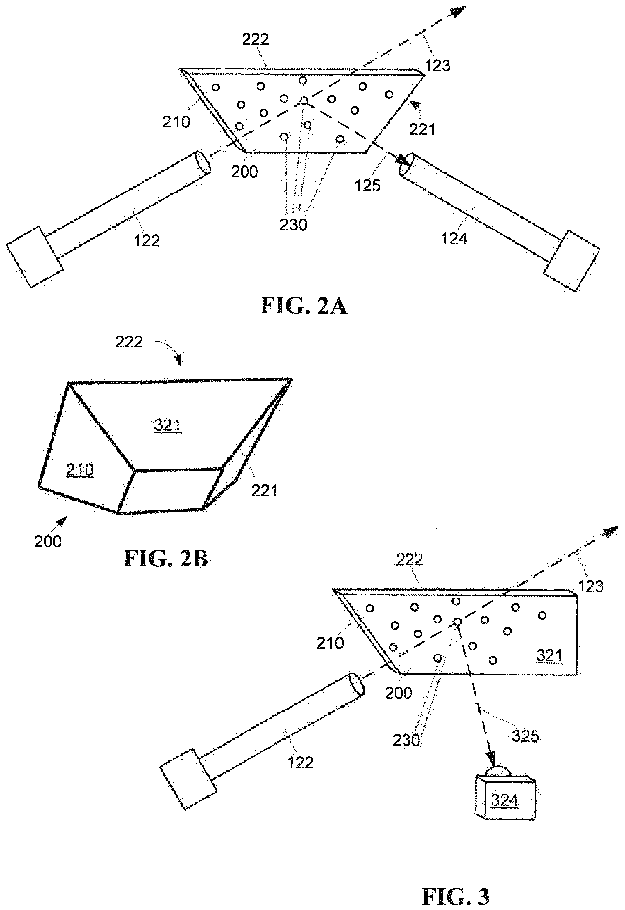

The first embodiment is directed to a structure formed of a solid material for simulating smoke for use in testing photoelectric smoke detectors. In comparison with the system shown in FIG. 1, under the first embodiment shown in FIGS. 2A-B the system uses a smoke simulator structure 200 as a three dimensional target instead of a two dimensional target 120 (FIG. 1) to better simulate a pattern of light 125 scattered from actual smoke particles. In general, the smoke simulator structure 200 includes a volume of optical material that conveys light at least of a specified primary wavelength and includes light scattering features 230 at multiple locations within the volume that are configured to deflect/scatter light 125 in a manner similar to smoke particles.

The smoke simulator structure 200 includes an ingress surface 210 configured to receive a light beam 123 from a light source 122, a second egress surface 222 configured to allow the light beam 123 to exit the smoke simulator structure 200 with minimal reflection, and a first egress surface 221 configured to convey deflected/scattered light 125 toward the light sensor 124. The smoke simulator structure 200 is formed of an optical material, for example glass or an optically transparent plastic substantially transparent to a primary wavelength of the light source 122, for a non-limiting example, in the near infrared to infrared range. As used within this disclosure, "substantially" means "very nearly," or to within normal manufacturing tolerances. The smoke simulator structure 200 contains light scattering features 230 configured to simulate the deflection/scattering properties of smoke particles.

Under the first embodiment, the light scattering features 230 may include damaged regions of the optical material forming the smoke simulator structure 200, for example, burned, distorted, or otherwise altered regions that may scatter the light beam 123 to produce the deflected/scattered light 125. The damaged regions in the optical material may be formed, for example by ablating the regions inside the optical material with a laser. The damaged regions dots/points may be, for example, roughly spherical in shape with diameters from one micron or smaller up to 150 microns or larger, and may be formed in a fixed pattern or at random, from 100 to 1,000,000 in quantity.

After the light scattering features 230 have been formed inside the smoke simulator structure 200, the surface of the smoke simulator structure 200 may be ground, machined, and/or otherwise shaped into a shape that has surfaces 210, 221, 222 where the light enters and exits the smoke simulator structure 200. The ingress surface 210 and/or the first egress surface 221 may preferably be, for example, nearly optically flat. The ingress surface 210 may preferably be nearly normal to the light beam 123 entering the smoke simulator structure 200. Similarly, the first egress surface 221 may preferably be nearly normal to the deflected/scattered light 125 leaving the smoke simulator structure 200. An anti-reflection coating may be applied to the ingress surface 210 and/or the first egress surface 221, such that the ingress surface 210 and/or the first egress surface 221 do not substantially reflect the primary wavelength of the light beams 123, 125. This may be accomplished in many ways, for example, but not limited to mechanically polishing the surfaces, or gluing near-optically flat windows (not shown) to these surfaces 210, 221 that may also be antireflection coated. All other surfaces of the smoke simulator structure 200 may assume any shape and surface quality, but may preferably be coated so they absorb light. The light absorbing material may ensure that light not directly from the light source 122 does not deflect/scatter off of other features and eventually get detected by the light sensor 124 at levels that would be comparable to or higher than the signal from light scattered from the light scattering features 230 inside the smoke simulator structure 200. While FIGS. 2A-B show one possible configuration of the smoke simulator structure 200, many others are possible. For example, as shown in FIGS. 2A-B, the light sensor 124 may be positioned to receive the deflected/scattered light 125 in a plane normal to the ingress surface 210 and the first egress surface 221.

As shown by FIG. 3, in alternative embodiments, the first egress surface 321 may be at a different angle with respect to the ingress surface 210 than the first embodiment. For example, the first egress surface 321 may be normal to the ingress surface 210 and the second egress surface 222.

Under a second embodiment the optical material may be formed from a clear liquid resin, for example, epoxy, and the light scattering features 230 may include solid particles or physical inclusions of one or more sizes, preferably of the size of typical smoke particles, for example, 0.1 µm to 5 µm in any one dimension. An example of such a solid particle includes a nano-sphere coated with a metal, however, the shape of the light scattering features 230 may be irregular (non-spherical). The light scattering features 230 may be mixed into the clear resin while in a liquid state before hardening. The mixed resin may be poured into a mold so that after hardening the mixed resin approximates the desired final shape of smoke simulator structure 200. The external surfaces of the smoke simulator structure 200 may be polished and/or treated as describe above regarding the first embodiment. The second embodiment may be visually indistinct from the first embodiment shown by FIGS. 2A-B. However, because of the complexities of the process of forming a resin containing physical inclusions suspended in a manner that simulates the dispersion characteristics of different types and/or densities of smoke, the first embodiment may be generally preferable to the second embodiment.

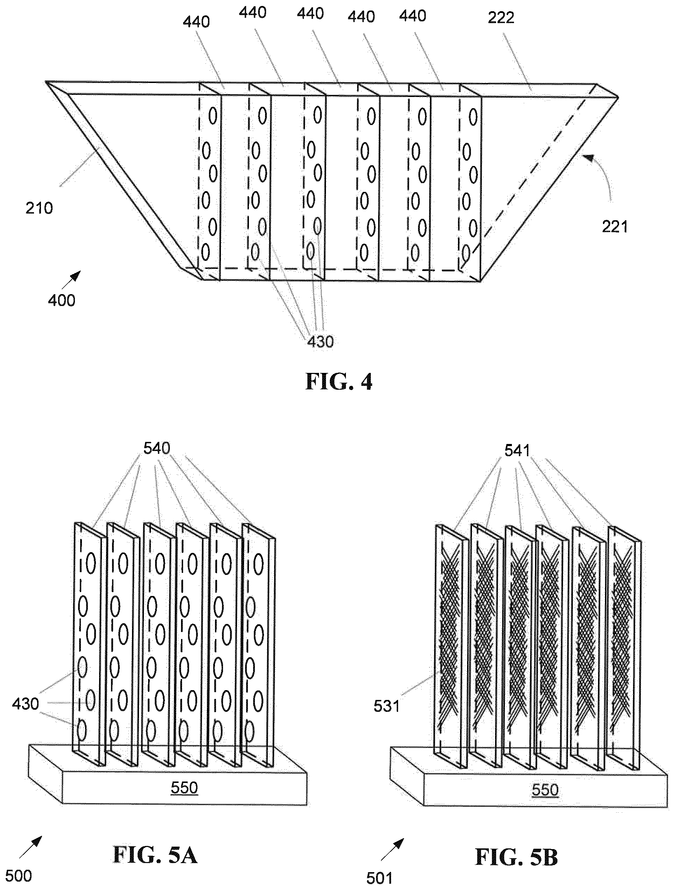

As shown by FIG. 4, under a third embodiment of a smoke simulator structure 400, the optical material may be formed from one or more substantially flat glass plates 440, for example each of the one or more glass plates 440 having a thickness between 20 µm to 2 mm or more between parallel front and back surfaces. The front and/or back surface of each glass plate 440 may be treated to form multiple light scattering features 430. For example, the multiple light scattering features 430 may be formed by damaging the surface of the glass plates 440 with a laser (see FIGS. 4, 5A), or roughening portions 531 of one or both glass surfaces with a sand blaster or sandpaper, among other techniques, as shown in FIG. 5B. The glass plates 440 may be stacked, arranged in parallel or in other angles, and may be spaced evenly or unevenly. The glass plates 440 may directly abut one another with no gap therebetween, as shown in FIG. 4. Alternatively, the glass plates 540, 541 may be spaced apart from one another, as shown by FIGS. 5A and 5B, for example, by mounting each of the glass plates 540 in a base member or holder 550. The base member 550 is configured to receive and securely hold the glass plates 540. The base member 550 may preferably be formed of a material and/or be treated with a material that does not reflect/scatter the light beams 123, 125.

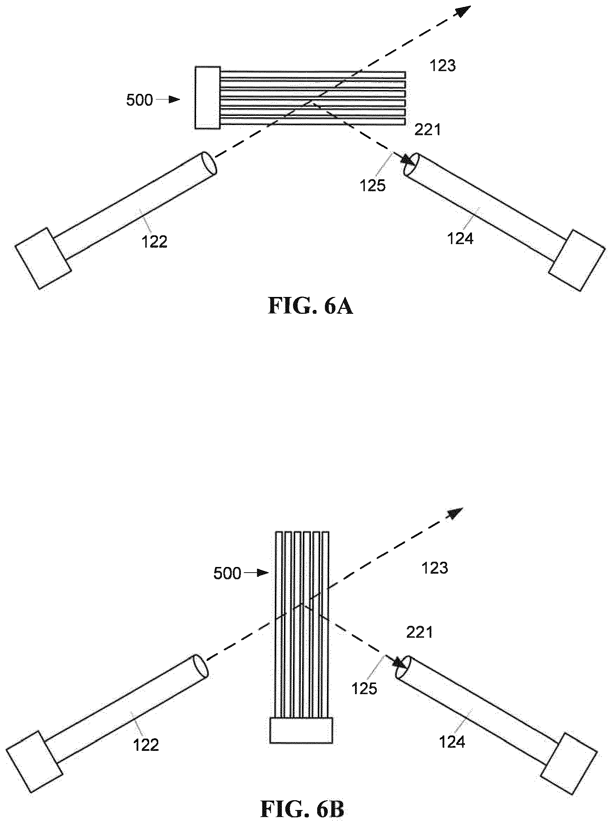

FIG. 6A shows a first exemplary orientation of the third embodiment of the smoke simulator structure 500 positioned relative to a light source 122 and a light sensor 124. FIG. 6B shows a second exemplary orientation of the third embodiment of the smoke simulator structure 500 positioned relative to the light source 122 and the light sensor 124. It should be noted that while FIGS. 6A and 6B show the smoke simulator structure 500, in alternative embodiments the smoke simulator structure 501 may be used.

The plates 440, 540 may be formed of, for example, microscope slides, "Gorilla Glass®" (the thin sheets of glass used in smart phone displays) or equivalent, or solar cell cover glass, among other possibilities. The plates 440, 540 may be anti-reflection coated if desired to reduce light getting to the light sensor 124 that is not scattered by the scattering features 430. The scattering features 430 may be formed in different ways. For example, a laser may be used to make small ablation points on the surface of the glass plates 440, 540, inside the glass plates 440, 540, or both, for example, on the order of one micron or smaller up to 150 microns or larger in size. A laser or other means such as a drill may be used to create holes completely through the glass plates 440, 540, each hole having a diameter on the order of one micron or smaller up to 150 microns or larger. The plates 541 may be formed of and/or treated with similar materials as the plates 440, 540.

Photolithography and/or etching techniques may be used to etch small areas on the surface of the glass plates 440, 540, for example, forming light scattering features 430 one micron or smaller up to 150 microns or larger. In lieu of (or in addition to) discrete scattering features, as shown by FIG. 5B, one or both surfaces of the glass plates 541 may be roughened. For example, a grinding material such as used for polishing surfaces may be used, using grinding particles sized large enough to scratch the surface of the glass plates 541. The roughness may be somewhat controllable in the sense that once the surface of the glass plates 541 is sufficiently scratched, additional surface treatment may remove more material but have little impact on the optical properties of the surface of the glass plates 541.

For the third embodiment, a density of light scattering features 430 of about one light scattering feature 430 every 150 µm on the glass plates 440 for example 500 µm thick may provide a density of features similar to the density of smoke when the smoke is supposed to trigger an alarm on the smoke sensor, assuming the light scattering features 430 are on both sides of the glass plates 440, 540. Features need not be on both sides of the glass plates 440, 540. The density of the light scattering features 430 may be adjusted to give an acceptable signal level from the light sensor 124 (FIG. 6A).

As shown by FIGS. 5A, 5B, one or more glass plates 540, 541 may be used to simulate smoke for a smoke detector testing system. It may be preferable to align a plurality of glass plates 540, 541 roughly in parallel, with a space (an air gap) between neighboring glass plates 540, 541 roughly equal to the thickness of the glass plates 540, 541. The set of glass plates 540, 541 may be mounted in the base member 550 to keep them mechanically aligned in the desired orientation. As shown by FIGS. 6A-6B, the glass plates 540, 541 may be mounted with an orientation in any fashion in the scattering region of the light sensor 124, preferably with the glass plates 540, 541 nearly parallel to (FIG. 6A) or nearly normal to (FIG. 6B), the location of the two dimensional target 120 shown in FIG. 1. The normal to orientation (FIG. 6B) may incorporate antireflection coating to control the light reaching the light sensor 124 that is not scattered by the scattering features 430, 531 in the glass plates 540, 541.

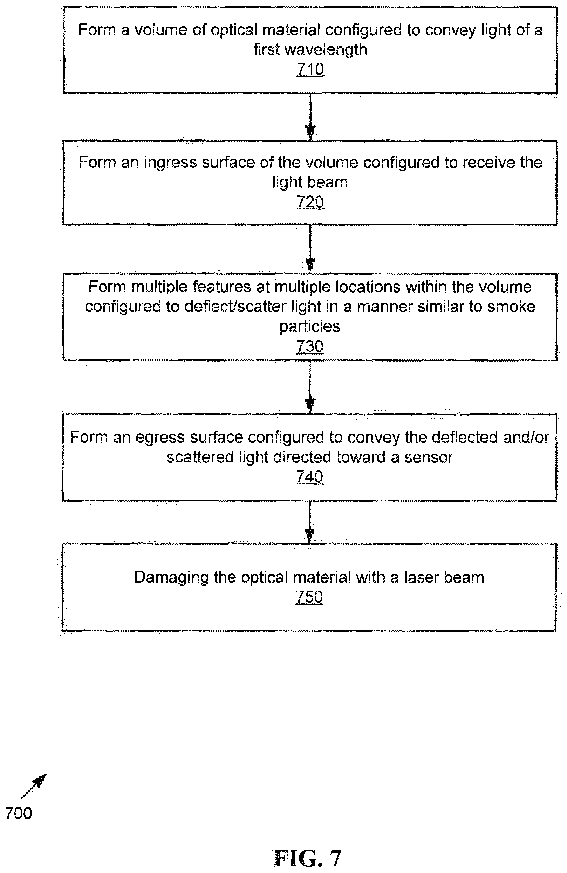

FIG. 7 is a flowchart 700 of an exemplary method for manufacturing the first embodiment of the smoke simulator test structure. It should be noted that any process descriptions or blocks in flowcharts should be understood as representing modules, segments, portions of code, or steps that include one or more instructions for implementing specific logical functions in the process, and alternative implementations are included within the scope of the present invention in which functions may be executed out of order from that shown or discussed, including substantially concurrently or in reverse order, depending on the functionality involved, as would be understood by those reasonably skilled in the art of the present invention.

A volume of optical material configured to convey light of a primary wavelength is formed, as shown by block 710. An ingress surface of the volume configured to receive the light beam is formed, as shown by block 720. Multiple features are formed at multiple locations within the volume configured to deflect/scatter light in a manner similar to smoke particles, as shown by block 730. A first egress surface configured to convey the deflected/scattered light directed toward the sensor is formed, as shown by block 740. The optical material may be damaged with a laser beam, as shown by block 750.

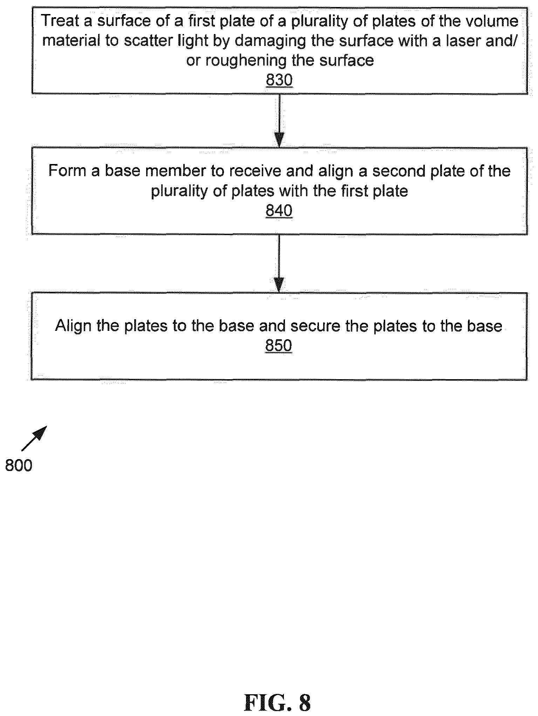

FIG. 8 is a flowchart 800 of further steps for the exemplary method for manufacturing the first embodiment of the smoke simulator test structure. A surface of a first plate of a plurality of plates of the volume material is treaded to scatter light by damaging the surface with a laser and/or roughening the surface, as shown by block 830. A base member is formed to receive and align a second plate of the plurality of plates with the first plate, as shown by block 840. The plates are aligned with the base and secured to the base, as shown by block 850.

In summary, it will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A smoke simulator structure for simulating smoke in a system for testing a smoke detector comprising a light source configured to emit a light beam comprising a first wavelength and a sensor configured to receive scattered and/or deflected light, comprising:
a volume of optical material configured to convey light of the first wavelength;
an ingress surface configured to receive the light beam;
multiple features at multiple locations within the volume configured to deflect/scatter light from the light beam in a manner similar to smoke particles; and
a first egress surface configured to convey the deflected/scattered light directed toward the sensor.

2. The smoke simulator structure of claim 1, wherein the ingress surface is not parallel with the first egress surface.

3. The smoke simulator structure of claim 1, further comprising a second egress surface configured to allow the light beam to exit the volume of optical material substantially without reflection.

4. The smoke simulator structure of claim 1, wherein the multiple features comprise regions of burned and/or roughed optical material.

5. The smoke simulator structure of claim 4, wherein the multiple features comprise between 100 and 1,000,000 regions of burned optical material.

6. The smoke simulator structure of claim 4, wherein the regions of burned optical material are roughly spherical in shape with diameters in the range of 50 µm to 125 µm.

7. The smoke simulator structure of claim 6, wherein the regions are formed in a fixed pattern.

8. The smoke simulator structure of claim 6, wherein the regions are formed at random or in a pseudo-random pattern.

9. The smoke simulator structure of claim 1, wherein the volume of optical material further comprises:
a plurality of plates of the optical material, and at least one plate of the plurality of plates comprises the multiple features; and
a base member configured to receive and align the plurality of plates.

10. The smoke simulator structure of claim 9, wherein the multiple features comprise a region of burned and/or roughed optical material on a surface of the at least one plate.

11. A method for forming a smoke simulator structure configured to scatter a light beam in a manner similar to smoke particles, comprising the steps of:
forming a volume of optical material configured to convey light of the first wavelength;
forming an ingress surface of the volume configured to receive the light beam;
forming multiple features at multiple locations within the volume configured to deflect/scatter light in a manner similar to smoke particles; and
forming a first egress surface configured to convey the deflected/scattered light directed toward the sensor.

12. The method of claim 11, wherein forming multiple features further comprises the step of damaging the optical material with a laser beam.

13. The method of claim 11, wherein the volume of optical material comprises a plurality of plates of the optical material, and forming the volume of optical material further comprises the steps of:
treating a surface of a first plate of the plurality of plates to scatter light; and
aligning the surface to receive a beam of light.

14. The method of claim 13, wherein treating the surface further comprises the step of damaging the surface with a laser and/or roughening the surface.

15. The method of claim 13, further comprising the step of forming a base member to receive and align a second plate of the plurality of plates with the first plate.

16. The method of claim 16, further comprising the step of aligning and securing the plurality of plates with the base member.
